# EUROPEAN PATENT APPLICATION

(11) **EP 1 787 863 A1**
(43) Date of publication of application: **23.05.2007**
(21) Application number: 05755688.8
(22) Date of filing: 30.06.2005
(51) Int. Cl.: B60R 5/04

(54) **LUGGAGE BOX FOR AUTOMOBILE**

(30) Priority: 28.07.2004 JP 2004219464
(71) Applicant: Kaneka Corporation, Kita-ku Osaka-shi, Osaka 530-8288 (JP)
(72) Inventor: MOGAMI, Kenji, Settsu-shi, Osaka 566-0044 (JP)
(74) Representative: Vossius & Partner
(86) International application number: PCT/JP2005/012093
(87) International publication number: WO 2006/011332

(57) **Abstract**

The present invention provides an automotive luggage box that has sufficient lightness and rigidity and that is excellent in thermal insulating properties and surface appearance/hardness. More specifically, the present invention relates to an automotive luggage box that is a luggage box 1 installed on a luggage compartment floor inside an automobile. The luggage box 1 includes a bottom face portion 2, and an upright wall portion 3 that is integral therewith. Both the bottom face portion 2 and the upright wall portion 3 are made of an injection foam molded article of a thermoplastic resin, having a foam layer 9, and non-foam layers 10 and 11 that are formed on the surface of the foam layer 9.

## Description

### Technical Field

The present invention relates to luggage boxes installed on luggage compartment floors inside automobiles.

### Background Art

As an automotive component, there is a luggage box that is installed on a luggage compartment floor inside an automobile and that stores luggage or tools. Recently, there is a demand for lighter automotive components from the viewpoint of energy conservation and resource saving. In particular, a luggage box is required to be even lighter, because it is a large product among automotive components and it may be taken out of the automobile. On the other hand, the luggage box needs to be sufficiently rigid such that its bottom face portion is not deformed and broken, for example, when heavy luggage is placed thereon. Furthermore, recently, the luggage box is required to have thermal insulating properties, because items such as perishable foods and drinks may be stored therein while being kept cool.

However, when injection molded products made of thermoplastic resins (Patent Document 1, for example), of which most conventional luggage boxes are made, are provided with a wall thickness suitable for improving the rigidity, the products become large and heavy. Thus, the products sufficiently cannot be light when being taken out or carried. Moreover, the thermal insulating properties also are insufficient.

On the other hand, luggage boxes have been proposed that are made of materials such as molded urethane chips (Patent Document 2), and a resin beads expansion molded article (Patent Document 3, and Patent Document 4, for example). Being made of foam molded articles, they are superior to injection molded articles in terms of the lightness and the thermal insulating properties. However, in order to secure the rigidity and the thermal insulating properties required in practical use, these foam molded articles need to have a significantly larger wall thickness than the injection molded articles, which usually have a thickness of approximately 3 mm. Their wall thickness varies depending on the expansion ratio, but is approximately 10 mm in the case of a form having an expansion ratio of 5, and is approximately 30 mm in the case of a form having an expansion ratio of 20, for example. Thus, a storage space becomes small, causing the problem that the size and the amount of items that are to be stored are restricted. Moreover, since these molded articles are made by expanding and fusing particles, the interface between the particles is net-like and uneven. Thus, for example, graining for providing a leather-like pattern, which usually is performed on automotive interior materials, is inappropriate for these molded articles, so that their appearance is poor. Furthermore, due to low surface hardness, the surface is scratched or damaged even with a slight impact.

A synthetic resin luggage box also is known that is made of an injection foam molded article having a foam layer and a non-foam layer and that is excellent in lightness and thermal insulating properties (Patent Document 5). However, this luggage box is for a motorcycle. The luggage box is fixed on the motorcycle body and cannot be taken out. Furthermore, in order to join the luggage box to a rider's seat with hinge, its upright wall portion comprises a non-foamed material, and thus the thermal insulating properties are not sufficient for storing items such as perishable foods and drinks while keeping them cool. Moreover, as an example of a base resin, a polypropylene-based resin has been disclosed, which is often used as an automotive interior material due to its excellent lightness, but the aspect has not been disclosed that when the polypropylene-based resin is highly expanded to expansion ratio of 2 or more, the lightness and the thermal insulating properties are significantly improved.

As described above, it has been difficult to realize an automotive luggage box that is satisfactory in terms of all of lightness, rigidity, thermal insulating properties, storage capacity, and surface appearance/hardness.
Patent Document 1: JP H04-45152U (Utility model)
Patent Document 2: JP 562. 171345U (Utility model)
Patent Document 3: JP H10-16647A
Patent Document 4: JP H10-29466A
Patent Document 5: JP H10-316067A

### Disclosure of Invention

### Problem to be Solved by Invention

It is an object of the present invention to provide an automotive luggage box that is excellent not only in lightness and rigidity, but also in thermal insulating properties and surface appearance/hardness.

### Means for Solving Problem

The present inventors found that when applying injection molding and foaming with a high expansion ratio, an automotive luggage box can be realized that has sufficient lightness and rigidity and that is excellent in thermal insulating properties and surface appearance/hardness, and thus the present invention has been achieved.

The present invention relates to an automotive luggage box installed on a luggage compartment floor inside an automobile, comprising a bottom face portion and an upright wall portion that is formed integrally with the bottom face portion, wherein the luggage box is made of an injection foam molded article of a thermoplastic resin.

Preferred embodiments of the automotive luggage box include the following:
(1) an automotive luggage box installed on a luggage compartment floor inside an automobile, comprising a bottom face portion and an upright wall portion that is formed integrally with the bottom face portion, wherein both the bottom face portion and the upright wall portion are made of an injection foam molded article of a thermoplastic resin, having a foam layer and a non-foam layer that is formed on a surface of the foam layer;
(2) the automotive luggage box, wherein a rear portion and/or side portions of the automotive luggage box has at least one grip structure that enables the automotive luggage box to be taken out and carried easily;
(3) the automotive luggage box, wherein the average cell size of the foam layer is not more than 500 µm, the thickness of the non-foam layer is not less than 10 µm and not more than 1000 µm, and the expansion ratio of the bottom face portion is not less than 2 and not more than 10;
(4) the automotive luggage box, wherein the injection foam molded article is produced by injecting a melt of a thermoplastic resin composition containing a blowing agent so as to fill, with the melt, a mold constituted by a fixed mold portion and a movable mold portion that can be moved back and forth, moving the movable mold portion backward, and then foaming the thermoplastic resin; and
(5) the automotive luggage box, wherein the thermoplastic resin is a polypropylene-based resin comprising, not less than 50 weight parts and not more than 95 weight parts of a linear polypropylene-based resin (A) that has a melt flow rate of not less than 10 g/10 minutes and not more than 100 g/10 minutes, and a melt tension of not more than 2 cN, and not less than 5 weight parts and not more than 50 weight parts of a modified polypropylene-based resin (B) that has a melt flow rate of not less than 0.1 g/10 minutes and less than 10 g/10 minutes, and a melt tension of not less than 5 cN, and that is strain hardenable, the total amount of the linear polypropylene-based resin (A) and the modified polypropylene-based resin (B) being 100 weight parts.

### Effect of Invention

The automotive luggage box of the present invention comprises an injection foam molded article including a bottom face portion and an upright wall portion that is formed integrally with the bottom face portion. Thus, the automotive luggage box has sufficient lightness and rigidity and is excellent in thermal insulating properties and surface appearance/hardness. Moreover, in addition to the lightness, the automotive luggage box has at least one grip structure at its rear portion and/or side portions. Thus, the automotive luggage box easily can be taken out and carried.

### Brief Description of Drawings

FIG. 1 is a perspective view showing an example of a luggage box of the present invention.
FIG. 2 shows a cross-sectional view taken along the line A-A' in FIG. 1, and an enlarged view of the portion B.
FIG. 3 is an installation example on a luggage compartment floor of an automobile.
FIG. 4 is a view showing an example of a using state of the luggage box of the present invention.

### [Description of Symbols]

- 1: luggage box
- 2: bottom face portion
- 3: upright wall portion
- 4,5: partitioning wall portion
- 6: rear grip structure
- 7, 8: side grip structure
- 9: foam layer
- 10, 11: non-foam layer
- 12: cover
- 13: automobile
- 14: luggage compartment floor

### Description of the Invention

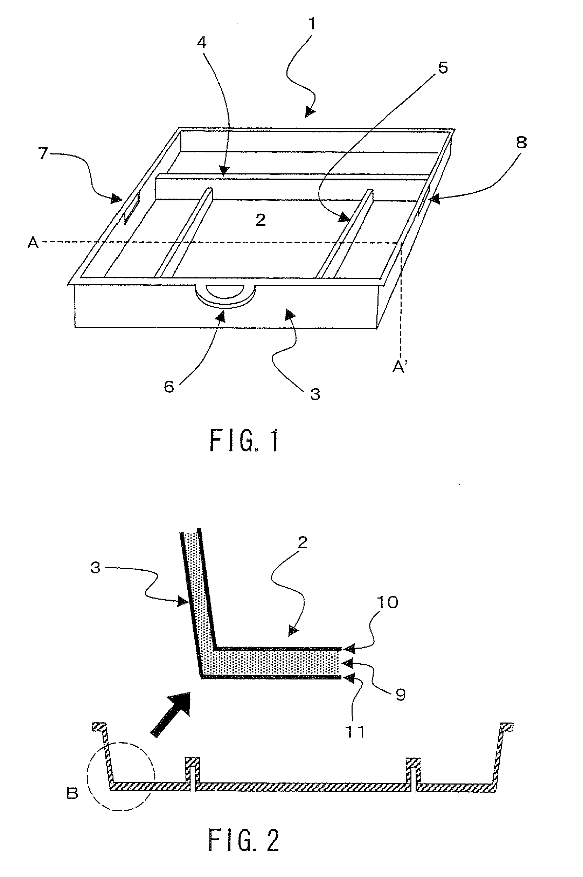

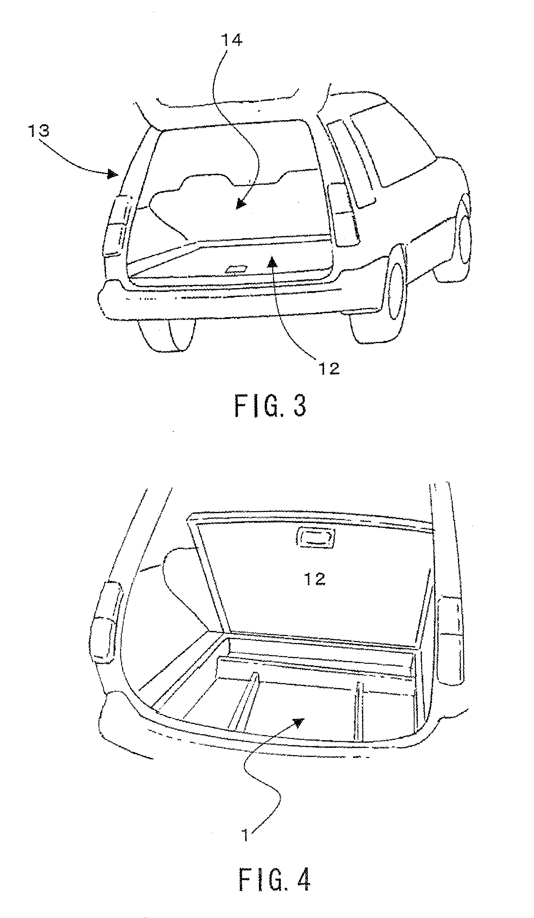

Hereinafter, an automotive luggage box of the present invention is described with reference to the drawings. FIG. 1 is a perspective view showing an example of an automotive luggage box of the present invention. FIG. 2 shows a cross-sectional view taken along the line A-A' in FIG. 1, and an enlarged view of the portion B. FIGS. 3 and 4 are installation examples on a luggage compartment floor of an automobile.

An automotive luggage box 1 of the present invention includes a bottom face portion 2, and an upright wall portion 3 that is molded integrally with the bottom face portion 2. If necessary, the luggage box 1 may be partitioned by partitioning wall portions 4 and 5 such that stored items do not move inside the luggage box during travel and damage the luggage box. The partitioning wall portions 4 and 5 also serve as a reinforcing material that improves the rigidity of the luggage box 1. The partitioning portions 4 and 5 may be formed integrally with the luggage box 1 as shown in the cross-sectional view of FIG. 2, or may be separately produced and then attached to the luggage box 1. In the latter case, the partitioning wall portions 4 and 5 may be fixed onto the luggage box 1 using an adhesive or screws, or may not be fixed so as to be removable. In order not to let the partitioning wall portions 4 and 5 be displaced or damage the luggage box 1 due to vibrations during travel even when they are not fixed, groove portions preferably are formed in the bottom face portion 2 and the upright wall portion 3 such that the partitioning portions 4 and 5 can be fitted to the bottom face portion 2 and the upright wall portion 3. In the case where the partitioning portions 4 and 5 are separately produced, the material may or may not be the same injection foam molded article as the luggage box 1. In addition to the injection foam molded article, generally used non-foam injection molded members can be used as the material.

For enabling the luggage box 1 to be taken out and carried easily, one or more grip structures 6, 7, and 8 preferably are provided on the side of a rear portion and/or side portions of the automobile.

The luggage box 1 of the present invention is made of an injection foam molded article of a thermoplastic resin. The enlarged view of the portion B in FIG. 2, which is the cross-sectional view taken along the line A-A' in FIG. 1, shows that the luggage box 1 comprises an injection foam molded article. In FIG. 2, both the bottom face portion 2 and the upright wall portion 3 have a foam layer 9, and non-foam layers 10 and 11 that are formed on the surface of the foam layer 9.

The average cell size of the foam layer 9 preferably is 500 µm or less, and more preferably 200 µm or less. The thickness of the non-foam layers 10 and 11 preferably is 10 µm or more and 1000 µm or less, and more preferably 100 µm or more and 500 µm or less. If the average cell size of the foam layer 9 is more than 500 µm, then excellent rigidity may not be achieved. If the thickness of the non-foam layers 10 and 11 is less than 10 µm, then excellent surface appearance/hardness tends not to be achieved, and the rigidity tends to be lowered. If the thickness is more than 1000 µm, then it may be difficult to achieve the lightness.

Moreover, the expansion ratio of the injection foam molded article preferably is 2 or more and 10 or less, and more preferably 3 or more and 6 or less. If the expansion ratio is less than 2, then it tends to be difficult to obtain sufficient lightness and thermal insulating properties. If the expansion ratio is more than 10, then the rigidity tends to be lowered significantly. "Expansion ratio" described herein refers to a value obtained by comparing the specific gravity of the foam molded article with that of a non-foam molded article that has been injection molded under the same condition as the foam molded article, except that a blowing agent is not added.

In the case where the luggage box 1 of the present invention is installed on a luggage compartment floor 14 of an automobile 13, the luggage box preferably is used as a cover-attached luggage box in combination with a cover 12 as shown in FIG. 3. In this case, the cover 12 covers over the upper face of the luggage box 1, and thus items stored in the luggage box 1 can be prevented from being damaged by superimposed heavy luggage or the like on the cover, and the thermal insulating properties of the luggage box 1 are improved. There is no specific limitation regarding the material of the cover, as long as it is not damaged or deformed in practical use by heavy luggage or the like placed on the upper face, but it is preferable to use the same injection molded foam as the luggage box, which is expected to improve the thermal insulating properties further. FIG. 4 shows a state in which the cover 12 is open and luggage can be stored in or taken out of the luggage box 1.

It should be noted that on the surface of the luggage box 1 and the cover 12 of the present invention, graining may be performed or a coating material such as nonwoven fabric may be laminated, for the sake of decoration.

Furthermore, a sound absorbing material may be attached to the lower face of the luggage box 1. There is no specific limitation regarding the sound absorbing material described herein, as long as it has an effect of preventing various types of noises (road noise, or exhaust system noise, for example) generated in the lower part of the automobile body from being transmitted to the luggage compartment floor 14. Examples of the sound absorbing material include generally used nonwoven fabrics and soft rubber plates.

Known methods can be used for producing the luggage box 1 that is made of the injection foam molded article of the thermoplastic resin. For example, the luggage box 1 may be produced by injecting a melt of a thermoplastic resin composition containing a blowing agent so as to fill, with the melt, a mold constituted by a fixed mold portion and a movable mold portion that can be moved back and forth, moving the movable mold portion backward, and then foaming the thermoplastic resin.

Moreover, in the case where a melt of a thermoplastic resin composition containing a blowing agent is injected to fill the mold, known methods can be used for preventing the surface appearance from being deteriorated by the formation of silver streak or swirl marks. For example, injection for filling may be performed in a state where the clearance of a mold cavity is smaller than the thickness of the molded article before foaming, or the mold may be filled in advance with a pressurized fluid (air, nitrogen, or carbon dioxide gas, for example) such as 0.1 to 10 MPa of inert gas before injection for filling. Among these, the latter method is preferable in that a molded article can be obtained that has better surface appearance.

Other molding conditions may be adjusted as appropriate in accordance with the melt flow rate (MFR) of the thermoplastic resin that is used, the type of the blowing agent, the type of a molding machine, or the form of the mold. For example, when a polypropylene-based resin is used, usually, the condition is applied that the resin temperature is 170 to 250°C, the mold temperature is 10 to 100°C, the molding cycle is 1 to 60 minutes, the injection speed is 10 to 300 mm/second, and the injection pressure is 10 to 100 MPa, for example.

There is no specific limitation regarding the blowing agent that can be used in the present invention, as long as it usually can be used in the injection foam molding, and examples thereof include chemical blowing agents and physical blowing agents. A chemical blowing agent is mixed with the thermoplastic resin in advance, then supplied to an injection molding machine, and decomposed inside a cylinder, thereby generating a gas such as carbon dioxide gas. Examples of the chemical blowing agents include: inorganic chemical blowing agents such as sodium bicarbonate and ammonium carbonate; and organic chemical blowing agents such as azodicarbonamide and N,N'-dinitrosopentatetramine. A physical blowing agent is injected into a molten resin inside a cylinder of a molding machine in the form of gas or supercritical fluid, and then dispersed or dissolved. The physical blowing agent functions as the blowing agent by being depressurized after injection into the mold. Examples of the physical blowing agents include: aliphatic hydrocarbons such as propane and butane; alicyclic hydrocarbons such as cyclobutane and cyclopentane; halogenated hydrocarbons such as chlorodifluoromethane and dichloromethane; and inorganic gases such as nitrogen, carbon dioxide gas, and air. These materials may be used alone or in combination of two or more.

Of these blowing agents, it is preferable to use inorganic chemical blowing agents among the chemical blowing agents, and inorganic gases such as nitrogen, carbon dioxide gas, and air among the physical blowing agent, because they safely can be used in a generally used injection molding machine and easily provide uniform and fine cells. Blowing aids of organic acids such as citric acid, or nucleating agents of inorganic fine particles of talc and lithium carbonate, for example, may be added to the blowing agents, if necessary, in order stably to make cells of the foam molded article uniform and fine. It usually is preferable to use the inorganic chemical blowing agents, as a masterbatch having a concentration of 10 to 50 wt% and using the same type of the resin as the thermoplastic resin, from the viewpoint of handleability, storage stability, and dispersibility into the thermoplastic resin.

The amount of the blowing agent used may be determined as appropriate based on the type of the thermoplastic resin, the expansion ratio of the final product, the type of the blowing agent, and the resin temperature during molding. For example, in the case of the inorganic chemical blowing agent, usually, the amount of the blowing agent used preferably is 0.1 weight parts or more and 20 weight parts or less, and more preferably 0.5 weight parts or more and 10 weight parts or less, with respect to 100 weight parts of the thermoplastic resin. When the blowing agent is used within this range, a foam molded article economically can be obtained that has an expansion ratio of 2 or more, and uniform and fine cells.

Additives may be used together with the thermoplastic resin composition if necessary, and examples of the additives include stabilizers such as an antioxidant, a metal deactivator, a phosphorus-based processing stabilizer, an ultraviolet absorber, an ultraviolet stabilizer, a fluorescent whitening agent, a metal soap, and an antacid absorbent, crosslinking agents, chain transfer agents, nucleation agents, lubricants, plasticizers, fillers, strengthens, pigments, dyes, flame retardants, and antistatic agents. It should be understood that these additives used if necessary are used to the extent that the moldability or the foaming properties are not impaired. Usually, the additives are used preferably in amounts of 0.01 weight parts or more and 10 weight parts or less, with respect to 100 weight parts of the thermoplastic resin composition.

Known materials may be used as the thermoplastic resin, and examples thereof include a polypropylene-based resin, a polyethylene-based resin, a polystyrene-based resin, a polyvinyl chloride-based resin, a polyamide-based resin, a polycarbonate-based resin, a saturated polyester-based resin, and a polymethacrylate-based resin. Of these, the polypropylene-based resin is preferable due to its excellent balance of the physical properties with respect to the lightness, the recyclability, and the moldability.

As the polypropylene-based resin that is used in the present invention preferably is a mixture of a linear polypropylene-based resin (A) and a modified polypropylene-based resin (B), for satisfying both moldability and foaming properties. There is no specific limitation regarding a mixing method, and known methods can be applied. Examples thereof include dry blending the resins in the form of pellets using tools such as a blender and a mixer, melt mixing the resins, and dissolving the resins in a solvent and then mixing them. In the present invention, a method in which the resins are dry blended and then molded by injection foam molding is preferable, because it has less heat history and lowers the melt tension less.

The linear polypropylene-based resin (A) has a melt flow rate of 10 g/10 minutes or more and 100 g/10 minutes or less, and preferably 15 g/10 minutes or more and 50 g/10 minutes or less, and a melt tension of 2 cN or less, and preferably 1 cN or less. If the melt flow rate is 10 g/10 minutes or more and 100 g/10 minutes or less, then when producing an injection foam molded article, short shot hardly occurs even in molding that provides a thin-walled portion in which the clearance of a mold cavity is approximately 1 to 2 mm, and thus it is easy to perform successive and stable molding. Moreover, since the expansion ratio is high, and cells collapse less during foaming, and a foam molded article can be obtained that is excellent in surface appearance/hardness. Furthermore, if the melt tension is 2 cN or less, then the transferability to the molded face is good, and thus a foam molded article tends to be obtained that is excellent in surface appearance/hardness.

"Melt flow rate" refers to a value obtained in measurement under a load of 2.16 kg at 230°C, following ASTM D-1238. "Melt tension" refers to the take-up load of a load cell-attached pulley, obtained when a strand is broken during a process in which the strand that is lowered at a piston lowering speed of 10 mm/minute from a die having an opening (φ 1 mm, 10 mm long) at 230°C is taken up at 1 m/minute, and then at a speed accelerated by 40 m/minute² after the strand state has been stabilized, using CAPILOGRAPH (manufactured by Toyo Seiki Seisaku-sho, Ltd.) with an attachment for measuring the melt tension.

The linear polypropylene-based resin (A) described herein refers to a polypropylene-based resin having a linear molecular structure, and is obtained using generally used polymerization methods, such as a method in which polymerization is performed in the presence of a catalyst system (Ziegler-Natta catalyst, for example) obtained from an organic metal compound and a transition metal compound carried by a carrier. More specifically, the linear polypropylene-based resin (A) includes, for example, a crystalline polymer that is a homopolymer, a block copolymer, or a random copolymer of propylene. The propylene copolymer containing 75 wt% or more of propylene is preferable, because it keeps the crystallization property, the rigidity, and the chemical resistance, for example, which characterize a polypropylene-based resin. Examples of a-olefin that can be copolymerized include: α-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene, cyclic olefin such as cyclopentene, norbornene, and tetracydo[6,2,1^{1,8},1^{3,6}]-4-dodecene; diene such as 5-methylene-2-norbornone, 5-ethylidene-2-norbornene, 1,4-hexadiene, methyl-1,4-hexadiene, and 7-methyl-1,6-octadiene; and vinyl monomers such as vinyl chloride, vinylidene chloride, acrylonitrile, vinyl acetate, acrylic acid, methacrylic acid, maleic acid, ethyl acrylate, butyl acrylate, methyl methacrylate, maleic anhydride, styrene, methylstyrene, vinyltoluene, and divinylbenzene. Among these, ethylene and 1-butene are preferable due to their improved cold brittleness resistance and low cost, for example.

The modified polypropylene-based resin (B) that can be used in the present invention has a melt flow rate of 0.1 g/10 minutes or more and less than 10 g/10 minutes, and preferably 0.3 g/10 minutes or more and 5 g/10 minutes or less, has a melt tension of 5 cN or more, and preferably 8 cN or more, and is strain hardenable. If the melt flow rate is 0.1 g/10 minutes or more and less than 10 g/10 minutes, then the dispersibility into the linear polypropylene-based resin (A) is good, and thus a foam molded article having a good surface appearance, high expansion ratio, and uniform cell can be obtained. Furthermore, the transferability to the molded face is good, and thus a foam molded article can be obtained that is excellent in surface appearance/hardness. Moreover, if the melt tension is 5 cN or more, then a foam molded article can be obtained that has uniform and fine cells and an expansion ratio of 2 or more.

"Strain hardenability" described herein is defined as a phenomenon in which the viscosity increases as the stretching strain of a melt increases, and usually can be obtained using a method disclosed in JP S62-121704A, that is, a method of plotting the relationship between time and stretching viscosity that is measured using a commercially available rheometer. Also, the strain hardenability can be obtained based on a breaking behavior of a melt strand during the melt tension measurement, for example. More specifically, if the melt tension drastically increases when the take-up speed is increased, and the melt strand is broken, then the melt is strain hardenable. When the modified polypropylene-based resin (B) is strain hardenable and the melt tension is high, a foam molded article with a high expansion ratio that is more than 2 can be obtained. Furthermore, silver streak or swirl marks, which are formed when cell easily collapses in a leading portion of a molten resin flowing during injection molding, are formed less, and thus a foam molded article tends to be obtained that is excellent in surface appearance/hardness.

Examples of the modified polypropylene-based resin (B) include modified polypropylene-based resins having a branch structure or a high-molecular-weight component, that are obtained, for example, by irradiating a linear polypropylene-based resin with radiation, or by melting and mixing a linear polypropylene-based resin, a radical polymerization initiator, and a conjugated diene compound. Among these, the modified poiypropylene-based resin obtained by melting and mixing a linear polypropylene-based resin, a radical polymerization initiator, and a conjugated diene compound is preferable, because it can be produced at a low cost without expensive equipment. Polypropylene-based resins as materials used for producing the modified polypropylene-based resin (B) may be the same as those for the linear polypropylene-based resin (A).

Examples of the conjugated diene compound include butadiene, isoprene, 1,3-heptadiene, 2,3-dimethylbutadiene, and 2,5-dimethyl-2,4-hexadiene. These materials may be used alone or in combination. Of these, butadiene and isoprene particularly are preferable, because they are obtained at a low cost and can be handled easily, and their reaction tends to proceed uniformly.

The amount of the conjugated diene compound added preferably is 0.01 to 20 weight parts, and more preferably 0.05 to 5 weight parts, with respect to 100 weight parts of the linear polypropylene -based resin. If the amount is less than 0.01 weight parts, then it may be difficult to achieve the effect of modification. If the amount is more than 20 weight parts, then the effect may be saturated, resulting in a loss of economy.

Monomers that can be copolymerized with the conjugated diene compound may be added, and examples thereof include vinyl chloride, vinylidene chloride, acrylonitrile, methacrylonitrile, acrylamide, methacrylamide, vinyl acetate, acrylic acid, methacrylic acid, maleic acid, maleic anhydride, acrylic acid metal salt, methacrylic acid metal salt, acrylic acid ester such as methyl acrylate, ethyl acrylate, butyl acrylate, 2-ethylhexyl acrylate, and stearyl acrylate and methacrylic acid ester such as methyl methacrylate, ethyl methacrylate, butyl methacrylate, 2-ethylhexyl methacrylate, and stearyl methacrylate.

Examples of the radical polymerization initiator include peroxides and azo compounds generally. It is preferable to use materials having an ability of hydrogen abstraction from the polypropylene-based resin or the conjugated diene compound, and general examples thereof include organic peroxides such as ketone peroxide, peroxyketal, hydroperoxide, dialkyl peroxide, diacyl peroxide, peroxy dicarbonate, and peroxyester. Among these, materials having a particularly high ability of hydrogen abstraction are preferable, and examples thereof include one or at least two types of peroxyketal such as 1,1-bis(t-butylperoxy)3,3,5-trimethylcyclohexane, 1,1-bis(t-butylperoxy)cyclohexane, n-butyl 4,4-bis(t-butylperoxy)valerate, and 2,2-bis(t-butylperoxy)butane; dialkyl peroxide such as dicumyl peroxide, 2,5-dimethyl-2,5-di(t-butylperoxy)hexane, α,α'-bis(t-butylperoxy-m-isopropyl) benzene, t-butyl cumyl peroxide, di-t-butyl peroxide, and 2,5-dimethyl-2,5-di(t-butylperoxy)-3-hexyne; diacyl peroxide such as benzoyl peroxide; and peroxyester such as t-butyl peroxyoctate, t-butyl peroxyisobutyrate, t-butyl peroxylaurate, t-butylperoxy 3,5,5-trimethyl hexanoate, t-butyl peroxyisopropylcarbonate, 2,5-dimethyl-2,5-di(benzoylperoxy)hexane, t-butyl peroxyacetate, t-butyl peroxybenzoate, and di-t-butyl peroxyisophthalate.

The amount of the radical polymerization initiator added preferably is 0.01 weight parts or more and 10 weight parts or less, and more preferably 0.05 weight parts or more and 2 weight parts or less, with respect to 100 weight parts of the linear polypropylene-based resin. If the amount added is less than 0.01 weight parts, then it may be difficult to achieve the effect of modification. If the amount added is more than 10 weight parts, then the effect of modification may be saturated, resulting in a loss of economy.

Examples of devices for reacting the linear polypropylene-based resin, the conjugated diene compound, and the radical polymerization initiator include kneaders such as rolls, co-kneaders, banbury mixers, brabenders, single screw extruders, and twin screw extruders, horizontal agitators such as twin axial surface renewing machines and twin axial multi-disc machines, and vertical agitators such as double-helical-ribbon agitators. Of these, it is preferable to use kneaders, and in particular extruders from the viewpoint of productivity.

There is no specific limitation regarding the order or the method for mixing and kneading (agitating) the linear polypropylene-based resin, the conjugated diene compound, and the radical polymerization initiator. The linear polypropylene-based resin, the conjugated diene compound, and the radical polymerization initiator may be mixed, and then melt kneaded (agitated). Alternatively, after the polypropylene-based resin is melt kneaded (agitated), the conjugated diene compound or the radical initiator may be mixed simultaneously or separately, the mixing being performed all at once or in a divided manner. The temperature of the kneader (agitator) preferably is 130 to 300°C, because at this temperature, the linear polypropylene-based resin is molten, but is not thermally decomposed. Furthermore, generally, the time for this process preferably is 1 to 60 minutes.

In this manner, the modified polypropylene-based resin (B) used in the present invention may be produced. There is no limitation regarding the form or the size of the polypropylene-based resins (A) and (B), and these resins may be in the form of pellets.

The amount of the linear polypropylene resin (A) preferably is 50 weight parts or more and 95 weight parts or less, and more preferably 60 weight parts or more and 90 weight parts or less, with respect to 100 weight parts as the total amount of the linear polypropylene -based resin (A) and the modified polypropylene-based resin (B) used in the present invention. The amount of the modified polypropylene-based resin (B) preferably is 5 to 50 weight parts, and more preferably 10 to 40 weight parts. With these amounts of the materials mixed, a foam molded article can be obtained that has uniform and fine cells and an expansion ratio of 2 or more. Moreover, short shot does not occur in molding that provides a thin-walled portion, and thus it is possible to perform successive and stable production, and to provide a foam molded article that is excellent in surface appearance/hardness at a low cost.

## Claims

1. An automotive luggage box for installation on a luggage compartment floor inside an automobile, comprising a bottom face portion and an upright wall portion that is formed integrally with the bottom face portion,
wherein the luggage box is made of an injection foam molded article of a thermoplastic resin.

2. An automotive luggage box for installation on a luggage compartment floor inside an automobile, comprising a bottom face portion and an upright wall portion that is formed integrally with the bottom face portion,
wherein both the bottom face portion and the upright wall portion are made of an injection foam molded article of a thermoplastic resin, having a foam layer and a non-foam layer that is formed on a surface of the foam layer.

3. The automotive luggage box according to claim 1 or 2,
wherein a rear portion and/or side portions of the automotive luggage box has at least one grip structure that enables the automotive luggage box to be taken out and carried easily.

4. The automotive luggage box according to any one of claims 1 to 3,
wherein the average cell size of the foam layer is not more than 500 µm, the thickness of the non-foam layer is not less than 10 µm and not more than 1000 µm, and the expansion ratio of the bottom face portion is not less than 2 and not more than 10.

5. The automotive luggage box according to any one of claims 1 to 4,
wherein the injection foam molded article is produced by injecting a melt of a thermoplastic resin composition containing a blowing agent so as to fill, with the melt, a mold constituted by a fixed mold portion and a movable mold portion that can be moved back and forth, moving the movable mold portion backward, and then foaming the thermoplastic resin.

6. The automotive luggage box according to any one of claims 1 to 5,
wherein the thermoplastic resin is a polypropylene-based resin comprising: not less than 50 weight parts and not more than 95 weight parts of a linear polypropylene-based resin (A) that has a melt flow rate of not less than 10 g/10 minutes and not more than 100 g/10 minutes, and a melt tension of not more than 2 cN; and not less than 5 weight parts and not more than 50 weight parts of a modified polypropylene-based resin (B) that has a melt flow rate of not less than 0.1 g/10 minutes and less than 10 g/10 minutes, and a melt tension of not less than 5 cN, and that is strain hardenable, the total amount of the linear polypropylene-based resin (A) and the modified polypropylene-based resin (B) being 100 weight parts.
